Europäisches Patentamt

European Patent Office

Office européen des brevets

(11) Numéro de publication: **0 410 837 A1**

## (12) DEMANDE DE BREVET EUROPEEN

(21) Numéro de dépôt: **90401996.5**

(22) Date de dépôt: **11.07.90**

(51) Int. Cl.5: **F16K 27/07**

(30) Priorité: **28.07.89 FR 8910232**

(43) Date de publication de la demande:
**30.01.91 Bulletin 91/05**

(84) Etats contractants désignés:
**AT BE DE ES GB IT NL**

(71) Demandeur: **S.A. ETABLISSEMENTS MAGYAR**
**13, Avenue Albert Ier**
**F-21000 Dijon(FR)**

(72) Inventeur: **Magyar, Georges**
**13, Avenue Albert 1er**
**F-21000 Dijon(FR)**

(74) Mandataire: **Jolly, Jean-Pierre et al**
**Cabinet Jolly 54, rue de Clichy**
**F-75009 Paris(FR)**

(54) Clapet de vidange de citerne, notamment de citerne calorifugée.

(57) Dans ce clapet, la partie de commande (3) du mouvement de la tige d'actionnement du piston du clapet est montée avec des éléments de fragilisation (101) sur sa plaque de base (23). La tige d'actionnement (19) de la partie de commande comporte elle-même au moins un point de fragilisation (103). Le piston du clapet est monté avec un ressort de rappel (107) à la fermeture appliqué solidairement à la partie du fond de la citerne et à l'intérieur de cette dernière, ce ressort étant comprimé à l'ouverture sous la sollicitation de la partie de commande.

FIG.1

## CLAPET DE VIDANGE DE CITERNE, NOTAMMENT DE CITERNE CALORIFUGÉE.

La présente invention a pour objet un clapet de vidange de citerne, notamment de citerne calorifugée.

Par la demande de brevet n° 87 05744 déposée par la même demanderesse, on connaît un clapet de vidange selon ce brevet du type dans lequel le piston de clapet est disposé dans la partie de fond de la citerne, comportant une partie de commande à volant de manoeuvre disposée sur la partie haute diamétralement opposée de la citerne, une tige d'actionnement reliant le piston de clapet à ladite partie de commande, caractérisé en ce que la plaque de base de la partie de commande est solidarisée avec étanchéité à la tôle interne de citerne, cette plaque étant surmontée d'un élément tubulaire en forme de cheminée émergeant au moins de la tôle externe ou jaquette de citerne, sur laquelle il s'applique avec étanchéité périphérique.

Néanmoins, un tel clapet à structure essentiellement rigide est vulnérable en cas de retournement de la citerne, par accident par exemple, de sorte qu'en cas de déformation de composants de la citerne, il ne pourrait empêcher à son endroit toute fuite de liquide contenu.

On connaît d'autres clapets de vidang de citerne (voir par exemple EP-A-0 185 803 (KOLSTE) et GB-A-2 105 006 (POPKEN)) à commande par le bas. Néanmoins, ce type de clapet pose généralement des problèmes d'étanchéité et donc de pollution du liquide contenu au niveau notamment du passage des tiges de commande du clapet dans le coude ou pipe de sortie.

L'invention vise à remédier à ces inconvénients et propose un clapet de vidange du type précité, caractérisé en ce que ladite partie de commande du mouvement de la tige d'actionnement du piston du clapet est montée avec des éléments de fragilisation sur sa plaque de base, en ce que la tige d'actionnement de la partie de commande comporte elle-même au moins un point de fragilisation et en ce que le piston du clapet est monté avec un ressort de rappel à la fermeture appliqué solidairement à la partie de fond de la citerne, à l'intérieur de cette dernière, ce ressort étant comprimé à l'ouverture sous la sollicitation de la partie de commande.

Il résulte de cette disposition qu'en cas d'accident, renversement de la citerne et déformation de celle-ci, par exemple, la partie de commande peut être amenée selon la déformation à se désolidariser du reste du clapet, par rupture de ses éléments de fixation ou de sa tige d'actionnement. Le piston du clapet ainsi libéré de sa commande demeure alors fermé sous la pression du ressort. Aucune fuite de produit notamment de produit contaminant ou dangereux ne peut alors apparaître à cet endroit.

Il est en outre prévu, en cas de rupture de la commande, un dispositif d'actionnement de sécurité supplémentaire fixé sous la citerne et permettant de manoeuvrer le piston du clapet pour évacuer le produit. Ce dispositif peut consister en un simple bossage formé dans le coude de sortie ou vidange sous le clapet, ce bossage étant taraudé à la verticale et dans l'axe du piston de clapet. Le bossage est fermé en condition normale par une vis, mais peut recevoir une tige filetée dont la manoeuvre en rotation permettra d'atteindre le piston pour le soulever et vidanger ainsi la citerne.

Naturellement, cette disposition vaut quelle que soit la citerne utilisée, calorifugée ou non. De même en ce qui concerne la partie de commande, tous les équivalents au volant de manoeuvre peuvent convenir et, par exemple, un vérin hydraulique ou pneumatique remplaçant ce dernier. De préférence, on utilisera un vérin pneumatique à simple effet agissant à l'ouverture et commandé à distance pour éviter d'accéder à la partie supérieure de la citerne.

L'invention est illustrée ci après à l'aide d'exemples de réalisation et en référence aux dessins annexés sur lesquels :

- La figure 1 est une vue schématique en coupe d'un clapet de vidange avec volant de manoeuvre selon l'invention, et
- La figure 2 est une vue équivalente à la figure 1 mais pour un clapet selon l'invention équipé d'un vérin d'actionnement.

La description qui va suivre se limitera à celle des éléments nouveaux du clapet. On se reportera à la demande de brevet susmentionnée pour la description des éléments connus, ces derniers étant désignés par les mêmes références.

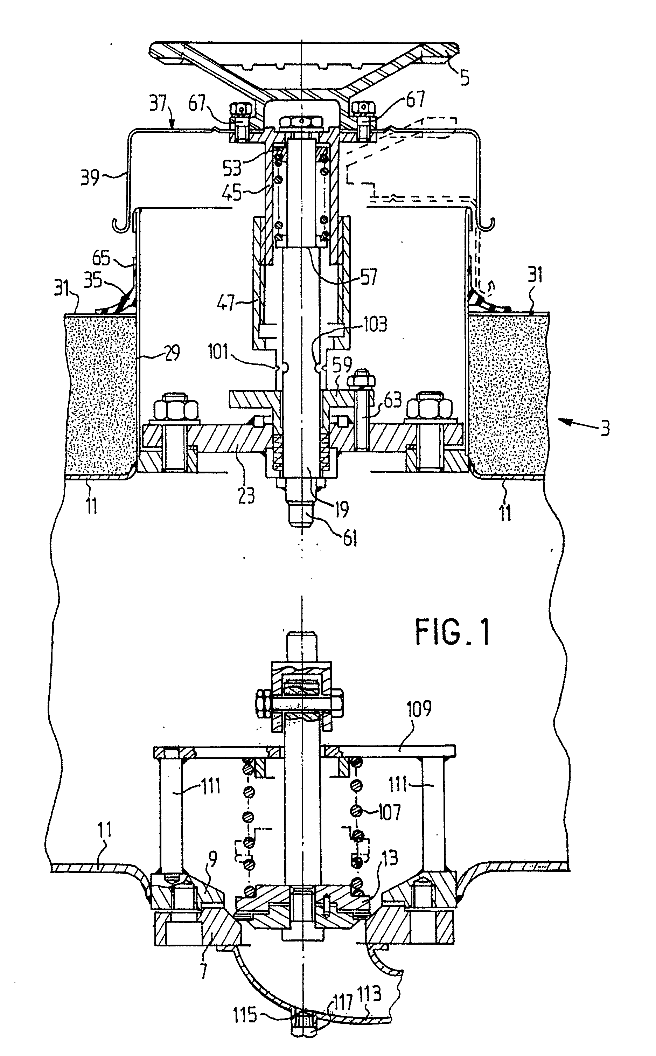

Comme représenté à la figure 1, le clapet de vidange selon l'invention comporte une rainure circulaire de fragilisation 101 au niveau de la base du manchon fileté 47 support du volant de manoeuvre et sur un même plan une rainure de fragilisation 103 sur la tige d'actionnement 9 du volant de manoeuvre. L'ensemble de ces deux rainures constitue un point faible de rupture possible du volant de manoeuvre.

Par conséquent, puisque le volant de manoeuvre fait saillie sur la citerne, le retournement de la citerne peut rompre soit le volant de manoeuvre sans autre action sur la citerne, soit le volant et/ou la tige d'actionnement correspondante, si la déformation atteint la citerne.

Le piston 13 du clapet est monté avec un ressort de rappel 107 de fermeture du clapet au niveau inférieur de citerne. Ce ressort est enfermé dans la citerne et s'appuie sur une plaque supérieure 109 solidarisée par des tiges d'embase verticales 111 fixées sur la bride de fixation 9 du siège de clapet.

En position de fermeture, le ressort appuie sur le piston d'une force suffisante au maintien de la fermeture sans la commande (cas où la tige d'actionnement est rompue). Par conséquent en cas d'accident et de déformation des structures, le piston demeure fermé grâce à son ressort de rappel, évitant toute fuite de produit au niveau du clapet. Afin de permettre l'évacuation du produit malgré la rupture de la commande, on a prévu sur le coude de sortie 113 du produit un bossage inférieur taraudé 115 disposé dans l'axe du piston du clapet. Il suffit dans ces conditions d'enlever la vis de fermeture 117 qu'il reçoit en temps normal et d'engager à la place une tige filetée (non représentée) dont la manoeuvre en rotation permettra de repousser le piston appuyé sur son siège par le ressort de rappel.

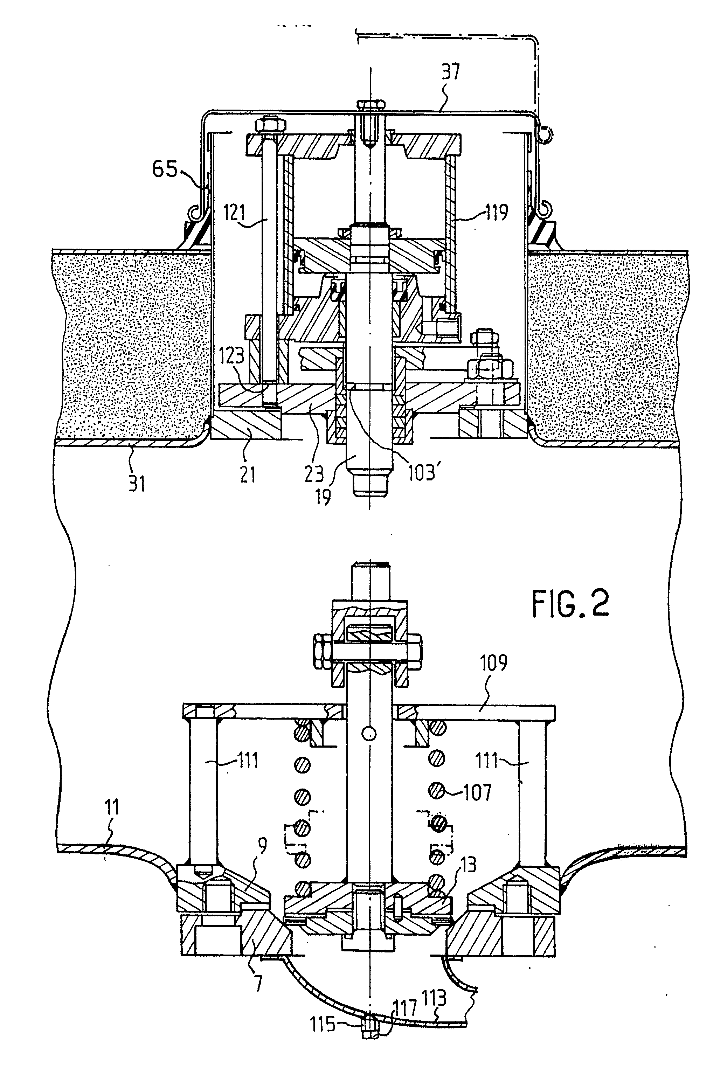

La figure 2 représente un clapet de vidange identique au précédent excepté que le volant de commande 5 a été remplacé par un vérin pneumatique 119 monté sur la plaque de base 23. Ce vérin est à simple effet, agissant seulement vers le haut pour remonter la tige d'actionnement du piston et remonter ce dernier à l'encontre de la force de rappel du ressort inférieur 107.

Le vérin est fixé sur la plaque de base 23 par des tiges verticales 121 (une seule est représentée) engagées sur sa base et en partie haute de son corps. Juste audessus de la plaque de base, ces tiges comportent une rainure circulaire 123 formant un point de fragilisation à la flexion.

La tige d'actionnement 19 du vérin est prévue traversante sur deux côtés.

Au niveau inférieur, elle conduit à la tige d'actionnement (non représenté) du piston de clapet. Une rainure circulaire de fragilisation 103′ est formée sur la tige 19, sensiblement dans le plan des rainures 123 des tiges de fixation du vérin. Le rôle de ces rainures 123 et 103′ est équivalent à celui du clapet à volant de manoeuvre.

Au niveau supérieur, le couvercle 37 est vissé sur l'extrêmité supérieure de la tige du vérin. Ce couvercle joue le même rôle que celui du clapet à volant de manoeuvre, découvrant notamment une bande de couleur à l'ouverture.

En actionnement, le vérin soulève le piston du clapet (représenté en trait mixte) et comprime le ressort 107. La fermeture est assurée par le seul rappel du ressort, le vérin étant relâché. Le piston est appliqué sur son siège avec une force relativement constante, déterminée de façon optimale par le tarage du ressort.

Avec ce vérin, il n'est naturellement plus utile d'accéder en haut de la citerne pour manoeuvrer le volant. La commande peut être assurée à distance, l'ouverture de clapet restant visible par une bande de couleur 65 à la levée du couvercle 37.

On notera que ce clapet à commande pneumatique évite toute pollution du liquide ou produit contenu dans la citerne. En effet, relativement aux clapets connus à commande automatique par le bas, par exemple aux clapets à vérin connus, il évite le passage de tiges de liaison intermédiaires entre la partie de commande (le vérin) et le piston du clapet, notamment au niveau du coude de sortie. On échappe ainsi aux problèmes d'étanchéité et donc de pollution possible au passage de ces tiges.

L'invention apporte ainsi un clapet de vidange pour citerne, à commande par le haut, particulièrement fiable sur le plan de la sécurité notamment pour les citernes de transport de produits dangereux.

**Revendications**

1.- Clapet de vidange de types du type dans lequel le piston de clapet est disposé dans la partie de fond de la citerne, comportant une partie de commande à volant de manoeuvre disposée sur la partie haute diamétralement opposée de la citerne, une tige d'actionnement reliant le piston de clapet à ladite partie de commande, avec une plaque de base de la partie de commande solidarisée avec étanchéité à la tôle interne de citerne, cette plaque étant surmontée d'un élément tubulaire en forme de cheminée émergeant au moins de la tôle externe ou jaquette de citerne, sur laquelle il s'applique avec étanchéité périphérique, caractérisé en ce que ladite partie de commande (3) du mouvement de la tige d'actionnement du piston du clapet est montée avec des éléments de fragilisation (101, 123) sur sa plaque de base, en ce que la tige d'actionnement (19) de la partie de commande comporte elle-même au moins un point de fragilisation (103; 103′) et en ce que le piston du clapet est monté avec un ressort de rappel (107) à la fermeture appliqué solidairement à la partie du fond de la citerne et à l'intérieur de cette dernière, ce ressort étant comprimé à l'ouverture sous la sollicitation de la partie de commande.

2.- Clapet de vidange selon la revendication 1, caractérisé en ce que lesdits éléments et point de fragilisation consistent en au moins une rainure circulaire (101, 123) formée sur les éléments de fixation de la partie de commande, par exemple à la base du manchon fileté (47) et en une rainure circulaire de fragilisation (103, 103′) formée sur un même plan sur la tige d'actionnement (19).

3.- Clapet de vidange selon l'une des revendications 1 et 2, caractérisé en ce qu'il comporte un dispositif d'actionnement de sécurité (115) fixé sous la citerne en vue d'ouvrir le clapet en cas de rupture de la partie de commande (3).

4.- Clapet de vidange selon la revendication 3, caractérisé en ce que ledit dispositif d'actionnement de sécurité consiste en un bossage taraudé (115) formé sur le coude d'évacuation (113) dans l'axe du piston, ce bossage étant normalement fermé par une vis (117) mais étant susceptible de recevoir une tige filetée en vue de soulever par rotation le piston.

5.- Clapet de vidange selon l'une des revendications précédentes, caractérisé en ce que la partie de commande (3) à volant de manoeuvre est remplacée par une partie de commande à vérin (119).

6.- Clapet de vidange selon la revendication 5, caractérisé en ce que le vérin (119) est un vérin pneumatique à simple effet agissant à l'ouverture du clapet à l'encontre du ressort inférieur (107) de rappel en fermeture.

7.- Clapet de vidange selon l'une des revendications 5 et 6, caractérisé en ce que le vérin (119) est fixé sur la plaque de base (23) également avec des éléments de fragilisation de la fixation, consistant par exemple en des rainures circulaires (123) formées sur ses tiges support (121), et en une rainure circulaire (103´) formée sur sa tige d'actionnement (19), sensiblement à un même plan.

8.- Clapet de vidange selon l'une des revendications 5 à 7, caractérisé en ce que la tige de vérin (19) est prévue traversante au niveau supérieur et le couvercle (37) est fixé à son extrémité haute.

9.- Clapet de vidange selon l'une des revendications précédentes, caractérisé en ce que ledit ressort (107) s'appuie par sa partie haute sur une plaque supérieure (109) solidarisée à la bride de fixation du siège de clapet, à l'intérieur de la citerne.

FIG.1

FIG.2

Office européen
des brevets

**RAPPORT DE RECHERCHE
EUROPEENNE**

Numéro de la demande

**EP 90 40 1996**

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 185 803  (KOLSTE) <br> * Page 6, lignes 5-25 * <br> − − − | 1,2 | F 16 K 27/07 |
| D,A | EP-A-0 028 851  (RACE) <br> * Page 3, lignes 33-34 * <br> − − − | 1,2 | |
| D,A | GB-A-2 105 006  (POPKEN) <br> * Page 3, lignes 80-83 * <br> − − − − − | 1,2 | |

**DOMAINES TECHNIQUES
RECHERCHES (Int. Cl.5)**

F 16 K
B 61 D

Le présent rapport de recherche a été établi pour toutes les revendications

| Lieu de la recherche | Date d'achèvement de la recherche | Examinateur |
|---|---|---|
| La Haye | 07 novembre 90 | VERELST P.E.J. |